# EUROPÄISCHE PATENTSCHRIFT

(11) **EP 0 702 186 B1**
(45) Veröffentlichungstag und Bekanntmachung des Hinweises auf die Patenterteilung: **07.10.1998**
(21) Anmeldenummer: 95890121.7
(22) Anmeldetag: 27.06.1995
(51) Int. Cl.: F16L 37/24, F16L 37/252, F16L 39/00, F16L 37/56

(54) **Anschluss eines Gerätes an eine rohrförmige Armatur**
A coupling between a device and a tubular fitting
Raccord entre un dispositif et un élément tubulaire de robinetterie

(30) Priorität: 13.09.1994 AT 1745/94
(43) Veröffentlichungstag der Anmeldung: 20.03.1996
(73) Patentinhaber: BWT AKTIENGESELLSCHAFT, 5310 Mondsee (AT)
(72) Erfinder: Oberhauser, Ernst, A-5440 Golling 311 (AT)
(74) Vertreter: Atzwanger, Richard, Dipl.-Ing. Patentanwalt

(56) Entgegenhaltungen:
- GB-A- 754 644
- GB-A- 1 291 619
- US-A- 3 645 562
- US-A- 5 259 651

## Beschreibung

Die gegenständliche Erfindung betrifft eine Vorrichtung zum lösbaren Anschluß eines Gerätes der Technik für flüssige bzw. gasförmige Medien, insbesondere der Sanitärtechnik, der Heizungstechnik und der Gastechnik, an eine rohrförmige Armatur bestehend aus der Armatur, welche zwei Rohrstücke aufweist, die zum Anschluß an eine Leitung dienen und welche einen quer abragenden Rohrstutzen aufweist, der mit einem inneren Kanal und mit einem äußeren Kanal ausgebildet ist, wobei die beiden Kanäle mit jeweils einem der beiden Rohrstücke verbunden sind, und aus einem Anschlußstutzen für das Gerät, der gleichfalls mit einem inneren Kanal und mit einem äußeren Kanal ausgebildet ist.
Derartige Geräte sind Pumpen, Filter, Druckminderer, Rohrbruchsicherungsgeräte, Dosiergeräte, Enthärtungsgeräte, Mengenmeßgeräte u.dgl.

Bei derartigen Vorrichtungen fließt das durch die Zuleitung zuströmende Medium über einen der beiden Kanäle des Rohrstutzens bzw. des Anschlußstutzens durch das Gerät hindurch, in welchem es behandelt wird, z.B. gefiltert oder mit einem Wirkstoff beaufschlagt wird. Anschließend strömt es durch den jeweils anderen Kanal des Anschlußstutzens und des Rohrstutzens über die Ableitung ab, wobei es z.B. in ein Schwimmbecken zurückgeführt wird.

Bei diesen Geräten besteht das Erfordernis, diese dann, wenn deren Wirkung nicht mehr gewährleistet ist, abzukuppeln, um sie durch neue Geräte zu ersetzen bzw. um sie warten zu können, z.B. um Filter zu reinigen oder um Wirkstoffe neu einfüllen zu können.

Gemäß dem bekannten Stand der Technik werden derartige Geräte dadurch angeschlossen, daß sowohl der Rohrstutzen als auch ein Anschlußstutzen der Geräte mit Anschlußflanschen ausgebildet sind, welche aneinander zur Anlage gebracht und miteinander durch Schrauben verbunden werden. Gemäß einer Ausführungsvariante ist der eine Bauteil mit einem Ansatz od.dgl. ausgebildet, welcher mit Gewindebohrungen ausgebildet ist und ist der andere Bauteil mit einem dem Ansatz entsprechenden Flansch ausgebildet, welcher gleichfalls mit Bohrungen ausgebildet ist, wobei die beiden Bauteile mittels Schrauben, welche die im Flansch vorgesehenen Bohrungen durchsetzen und welche in die im Ansatz od.dgl. vorgesehenen Gewindebohrungen eingeschraubt werden, miteinander verbunden werden. Beim Anschluß derartiger Geräte an Rohrleitungen besteht demnach das Erfordernis, eine Mehrzahl von Schraubbolzen einzusetzen. In gleicher Weise besteht bei der Demontage dieser Geräte das Erfordernis, diese Schraubbolzen zu entfernen.

Der gegenständlichen Erfindung liegt demnach die Aufgabe zugrunde, eine Vorrichtung zum lösbaren Anschluß eines Gerätes der Technik für flüssige und gasförmige Medien an eine rohrförmige Armatur zu schaffen, durch welche eine wesentlich vereinfachte Montage bzw. Demontage dieser Geräte ermöglicht ist. Dabei besteht zudem das Erfordernis zu gewährleisten, daß eine unbeabsichtigte Entkupplung ausgeschlossen ist.

Diese Aufgaben werden erfindungsgemäß dadurch gelöst, daß einerseits der quer abragende Rohrstutzen oder ein an diesem mittels eines Anschlußflansches befestigbarer Adapterstutzen und andererseits der Anschlußstutzen für das Gerät oder ein an diesem mittels eines Anschlußflansches befestigbarer Adapterstutzen mit einander zugeordneten, an sich bekannten Kupplungselementen ausgebildet sind, bei welchen die ersten Kupplungselemente durch an der Mantelfläche eines der Stutzen in einem Kreisring angeordnete, voneinander im Abstand befindliche Rippen und die zweiten Kupplungselemente durch vom freien Ende des anderen Stutzens vorragende Klauen, welche durch die zwischen den Rippen befindlichen Ausnehmungen hindurch bewegbar sind und welche durch Verdrehung gegenüber den Rippen mit diesen verriegelbar sind, gebildet sind und daß eine Sicherungseinrichtung zur Verhinderung der unbeabsichtigten Verdrehung der beiden Kupplungselemente gegeneinander vorgesehen ist.

Eine derartige Kupplungsvorrichtung für sich ist aus der US-PS 3 645 562 bekannt. Allerdings bezieht sich diese Kupplungsvorrichtung auf Rohrstücke, welche mit einem einzigen Kanal ausgebildet sind. Aus dieser Literaturstelle ist es weiters nicht bekannt, die Kupplungsvorrichtung mit einer Sicherungseinrichtung gegen eine unbeabsichtigte Verdrehung der Kupplungselemente gegeneinander auszubilden. Der Grund hierfür liegt darin, daß bei zwei Rohrstücken, welche axial ausgerichtet ineinander übergehen, eine unbeabsichtigte Verdrehung, durch welche eine Entkupplung bewirkt wird, nicht verursacht werden kann.

Demgegenüber kann jedoch bei einer Leitung für ein fluides Medium, von welcher ein Rohrstutzen quer abragt, wobei an diesen Rohrstutzen über einen Anschlußstutzen ein Gerät angekuppelt ist, deshalb, da dieses Gerät quer zur Drehachse der Kupplungsvorrichtung abragt, durch einen Stoß od.dgl. eine Verschwenkung dieses Gerätes bedingt werden, wodurch die Kupplungselemente gegeneinander so weit verdreht werden können, daß eine unbeabsichtigte Entkupplung verursacht wird. Um dies ausschließen zu können, ist somit die zusätzliche Sicherungseinrichtung erforderlich. Diese zusätzliche Sicherungseinrichtung steht somit mit der Ausbildung der Rohrstutzen mit jeweils zwei Kanälen deshalb in einem technischen Zusammenhang, da derartige zwei Kanäle nur dann erforderlich sind, wenn an eine Leitung ein Gerät angeschlossen ist, welches von dem in der Leitung strömenden Medium durchsetzt wird.

Die GB-PS 754 644 offenbart eine Befestigungsvorrichtung für den Anschluß eines Gerätes an eine Leitung, wobei der Anschlußstutzen mit zwei Kanälen ausgebildet ist. Diese Befestigungsvorrichtung ist dabei durch eine Gewindemuffe gebildet. Eine derartige Vorrichtung ist jedoch nur bei solchen Geräten, wie z.B. Wassermessern, verwendbar, welche nur sehr selten von der Leitung entfernt werden müssen. Demgegenüber ist eine solche Befestigungsvorrichtung für den Anschluß von Filtergeräten oder Dosiergeräten deshalb völlig ungeeignet, da deren Demontage oder Montage viel zu aufwendig wäre.

Die gegenständliche Erfindung bezieht sich auch auf einen Adapterstutzen, welcher erforderlich sein kann:
Soferne nämlich Armaturen neu hergestellt werden, können der quer abragende Rohrstutzen und der geräteseitige Anschlußstutzen mit einander entsprechenden Kupplungselementen ausgebildet sein. Soferne jedoch eine Leitung mit einem Rohrstutzen schon installiert worden ist, an welchen ein Gerät in herkömmlicher Weise angeflanscht ist, könnte ein neues Gerät, dessen Anschlußstutzen mit erfindungsgemäßen Kupplungselementen ausgebildet ist, nicht zum Einsatz gebracht werden. Ebenso könnte bei einer neu installierten Leitung, bei welcher der quer abragende Rohrstutzen mit erfindungsgemäßen Kupplungselementen ausgebildet ist, ein herkömmliches Gerät, welches mit einem Anschlußflansch ausgebildet ist, nicht mehr verwendet werden. Um demnach einerseits bei bestehenden Leitungsinstallationen Geräte mit erfindungsgemäßen Kupplungselementen und andererseits bei Leitungsinstallationen mit erfindungsgemäßen Kupplungselementen auch Geräte mit herkömmlichen Anschlußflanschen zum Einsatz bringen zu können, sind zudem Adapterstutzen vorgesehen, welche an einem Ende mit einem Anschlußflansch und am anderen Ende mit erfindungsgemäßen Kupplungselementen ausgebildet sind.

Vorzugsweise ist als Sicherungseinrichtung eine Scheibe vorgesehen, welche mit Ausnehmungen versehen ist, die mit den Klauen übereinstimmen. Weiters kann als Sicherungseinrichtung ein Sicherungsring vorgesehen sein, welcher über den Kupplungselementen verspannbar ist. Schließlich kann eine der Klauen mit einer Gewindebohrung für die Aufnahme einer Sicherungsschraube ausgebildet sein.

Nach weiteren bevorzugten Merkmalen sind die ersten Kupplungselemente in an sich bekannter Weise durch vier über den Umfang gleichmäßig verteilte Rippen und die zweiten Kupplungselemente durch vier Klauen, deren Breite dem Abstand der Rippen voneinander entspricht, gebildet. Zudem können die einander zugeordneten Lagerflächen der Rippen und bzw. oder der Klauen in an sich bekannter Weise mit keilförmig ausgebildeten Auflaufflächen ausgebildet sein.

Der Gegenstand der Erfindung ist nachstehend anhand von in der Zeichnung dargestellten Ausführungsbeispielen näher erläutert. Es zeigen:
- Fig. 1: eine rohrförmige Armatur und ein mit dieser kuppelbares Gerät, in axonometrischer Darstellung,
- die Fig. 1a und 1b: Sicherungselemente, jeweils in axonometrischer Darstellung,
- Fig. 2: eine rohrförmige Armatur und ein mit dieser kuppelbares Gerät mit einer anderen Sicherungseinrichtung, in axonometrischer Darstellung,
- Fig. 3: eine rohrförmige Armatur, welche mit einem Druckminderer ausgebildet ist,
- Fig. 4: ein erstes Adapterrohr, in axialem Schnitt,
- Fig. 4a: ein zweites Adapterrohr, in axialem Schnitt, und
- die Fig. 5 bis 13: eine Mehrzahl von unterschiedlichen Geräten, welche an eine rohrförmige Armatur ankuppelbar sind.

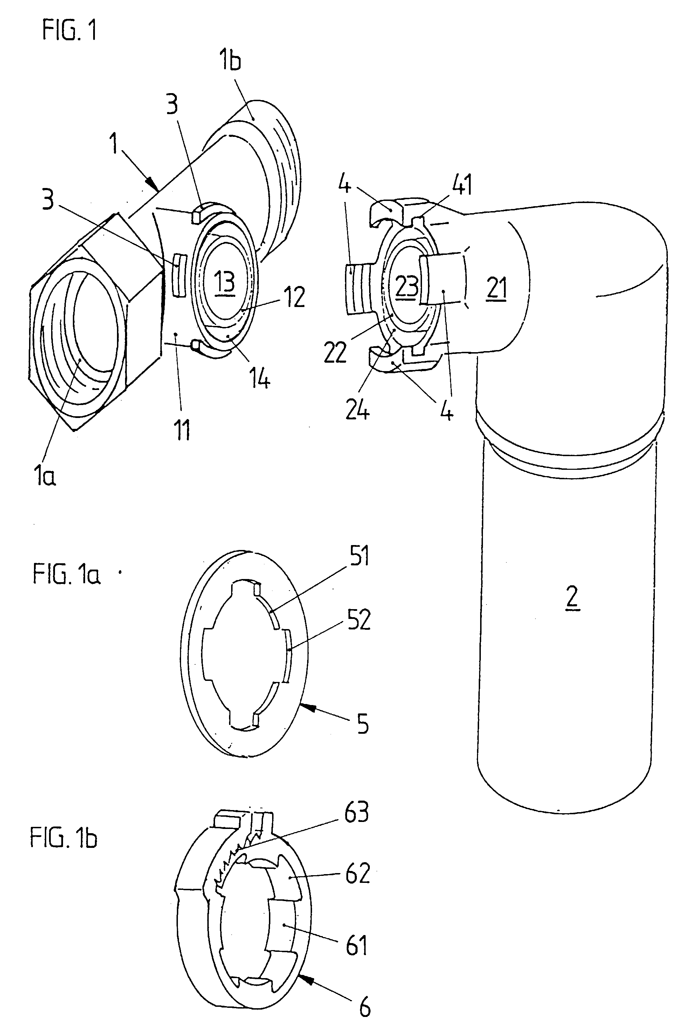

In Fig. 1 ist eine rohrförmige Armatur 1 dargestellt, an welche ein Zusatzgerät 2, z.B. ein Filtergerät, angeschlossen werden soll. Die rohrförmige Armatur 1, welche zwei Rohrstücke 1a und 1b aufweist, ist mit einem quer abragenden Rohrstutzen 11 ausgebildet, welcher mit einem Innenrohr 12 versehen ist, wodurch ein innerer Kanal 13 und ein äußerer Kanal 14 gebildet sind. Das Zusatzgerät 2 weist einen Anschlußstutzen 21 auf, welcher gleichfalls mit einem Innenrohr 22 versehen ist, wodurch ein innerer Kanal 23 und ein äußerer Kanal 24 gebildet sind.

Die Strömung des Mediums erfolgt dabei vom ersten Rohrstück 1a des Rohres 1 zum inneren Kanal 13 des Rohrstutzens 11, von diesem in den inneren Kanal 23 des Anschlußstutzens 21, durch das Zusatzgerät 2 hindurch und in den äußeren Kanal 24 des Anschlußstutzens 21, von welchem es durch den äußeren Kanal 14 des Rohrstutzens 11 zum zweiten Rohrstück 1b der rohrförmigen Armatur 1 gelangt.
Da diese Ausbildung der rohrförmigen Armatur 1 aus dem Stand der Technik bekannt ist, ist sie nicht weitergehend erläutert.

Weiters ist der Rohrstutzen 11 an seiner äußeren Mantelfläche mit vier im Verlauf eines Kreises angeordneten Rippen 3 ausgebildet, welche sich voneinander im Abstand befinden, wodurch sich zwischen den einzelnen Rippen 3 Ausnehmungen befinden. In entsprechender Weise ist der Anschlußstutzen 21 des Zusatzgerätes 2 mit vier von diesem abragenden Klauen 4 ausgebildet, welche gleichfalls im Verlauf eines Kreises angeordnet sind und durch welche Nuten 41 gebildet sind. Vorzugsweise sind die einander zugeordneten Lagerflächen der Rippen 3 und der Klauen 4 mit keilförmigen Abschrägungen, welche als Auflaufflächen dienen, ausgebildet.

Zum lösbaren Anschluß des Zusatzgerätes 2 an die in einem Rohrstrang befindliche rohrförmige Armatur 1 werden die Klauen 4 in die zwischen den Rippen 3 befindlichen Ausnehmungen eingesetzt, wodurch die einander entsprechenden Anschlußflächen der beiden Stutzen 11 und 21 aneinander zur Anlage kommen. In weiterer Folge wird das Zusatzgerät 2 um 45° verdreht, wodurch die Rippen 3 in die Nuten 41 hinein gelangen. Somit ist das Zusatzgerät 2 durch einen sehr einfachen Montagevorgang an eine Rohrleitung ankuppelbar. Da weiters vier im Winkelabstand von 90° angeordnete Kupplungselemente vorgesehen sind, kann das Zusatzgerät 2 in vier unterschiedlichen Winkellagen an die rohrförmige Armatur 1 angekuppelt werden.

Um eine unbefugte Entkupplung des Zusatzgerätes 2 zu verhindern, ist ein in Fig. 1a dargestellter Sicherungsring 5 vorgesehen, dessen innere Kontur einerseits mit Vorsprüngen 51 und andererseits mit Ausnehmungen 52, welche in ihrem Verlauf den Klauen 4 entsprechen, ausgebildet ist. Dieser Sicherungsring 5 wird vor der Kupplung der beiden Bauteile 1 und 2 miteinander auf den Rohrstutzen 11 aufgesetzt. Sobald das Zusatzgerät 2 gegenüber der rohrförmigen Armatur 1 verdreht worden ist, wird der Sicherungsring 5 axial so verstellt, daß sich dessen Vorsprünge 51 zwischen den Rippen 3 befinden. Weiters wird er unter einer geringfügigen mechanischen Verformung, z.B. in einer an der Außenfläche der Klauen 4 vorgesehenen Rille, in den Klauen 4 verrastet. Da durch diesen Sicherungsring 5 das Zusatzgerät 2 nicht mehr verdreht werden kann, bewirkt er eine Sicherung gegen eine unbefugte Lösung der Kupplung.

In Fig. 1b ist ein Sicherungsring 6 dargestellt, dessen Innenkontur gleichfalls Vorsprünge 61 und Ausnehmungen 62, welche den Klauen 4 entsprechen, ausgebildet ist und welcher eine Schließeinrichtung 63 aufweist. Dieser Sicherungsring 6 wird nach Ankupplung eines Zusatzgerätes an die rohrförmige Armatur 1 über die Klauen 4 aufgebracht, wodurch gleichfalls eine unbefugte Verdrehung des angekuppelten Gerätes gegenüber der rohrförmigen Armatur 1 verhindert wird.

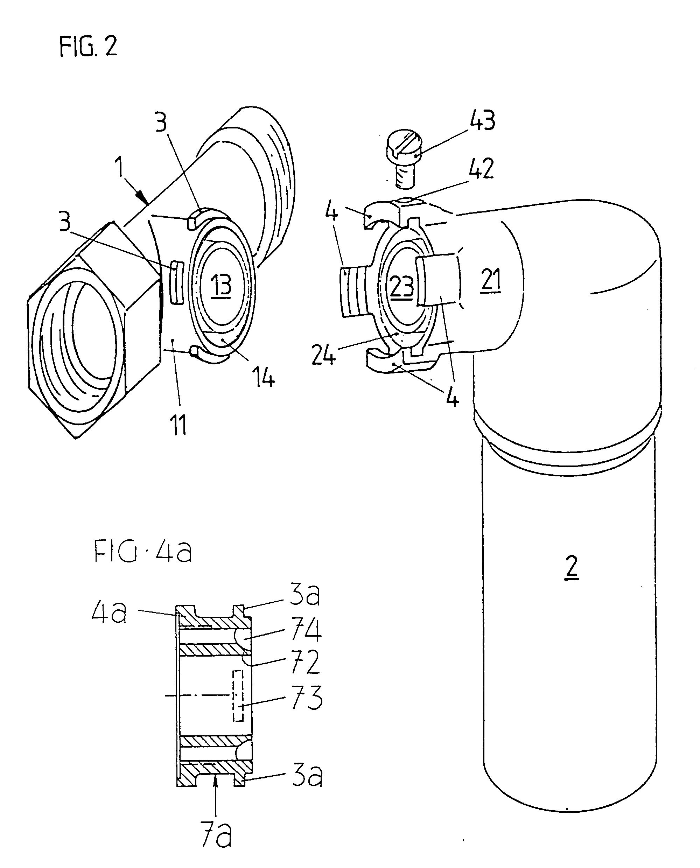

In Fig. 2 ist eine weitere Art der Sicherung dargestellt, welche darin besteht, daß eine der Klauen 4 mit einer Gewindebohrung 42 ausgebildet ist, in welche eine Sicherungsschraube 42 einsetzbar ist.

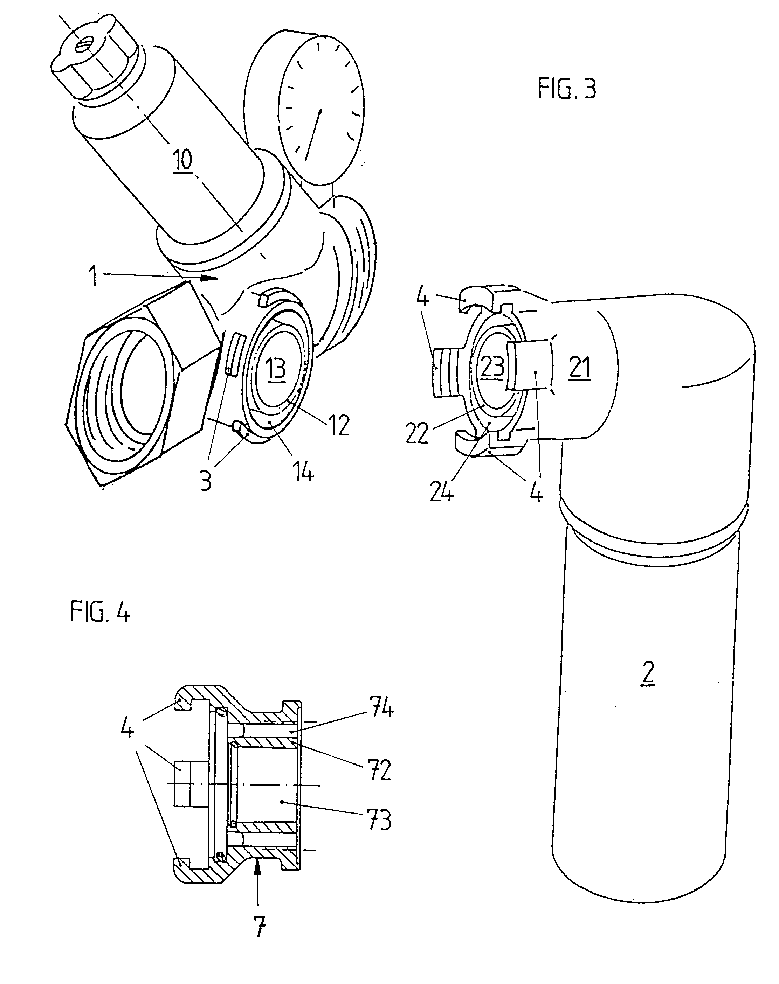

In Fig. 3 ist eine rohrförmige Armatur 1 dargestellt, welche sich von der Ausbildung gemäß Fig. 1 nur dadurch unterscheidet, daß sie mit einem Druckminderer 10 ausgebildet ist.

In Fig. 4 ist weiters ein erstes Adapterrohr 7 dargestellt, welches ein Innenrohr 72 aufweist, durch welches ein innerer Kanal 73 und ein äußerer Kanal 74 gebildet sind. Weiters ist dieses Adapterrohr 7 an seinem einen Ende gleichfalls mit Klauen 4 ausgebildet. An seinem anderen Ende kann dieses Adapterrohr 7 mittels Schrauben in herkömmlicher Weise mit einem Zusatzgerät verbunden werden. Hiedurch kann auch ein solches Zusatzgerät, welches nicht mit Klauen 4 ausgebildet ist, an eine mit Kupplungselementen ausgebildete rohrförmige Armatur 1 angeschlossen werden.

In Fig. 4a ist ein zweites Adapterrohr 7a dargestellt, welches auf einer Seite mit einem Anschlußflansch 4a und auf der anderen Seite mit Rippen 3a ausgebildet ist. Dieses Adapterrohr 7a dient dazu, mittels des Anschlußflansches 4a am zugeordneten Anschlußflansch einer herkömmlichen rohrförmigen Armatur 1 angeschraubt zu werden. Da die Rippen 3a erste Kupplungselemente bilden, können daran Zusatzgeräte angeschlossen werden, welche mit zugeordneten Klauen 4 als zweite Kupplungselemente ausgebildet sind.
Somit können mittels dieses Adapterrohres 7a solche Zusatzgeräte, welche mit Klauen 4 ausgebildet sind, an eine mit einem Anschlußflansch ausgebildete rohrförmige Armatur 1 angeschlossen werden.

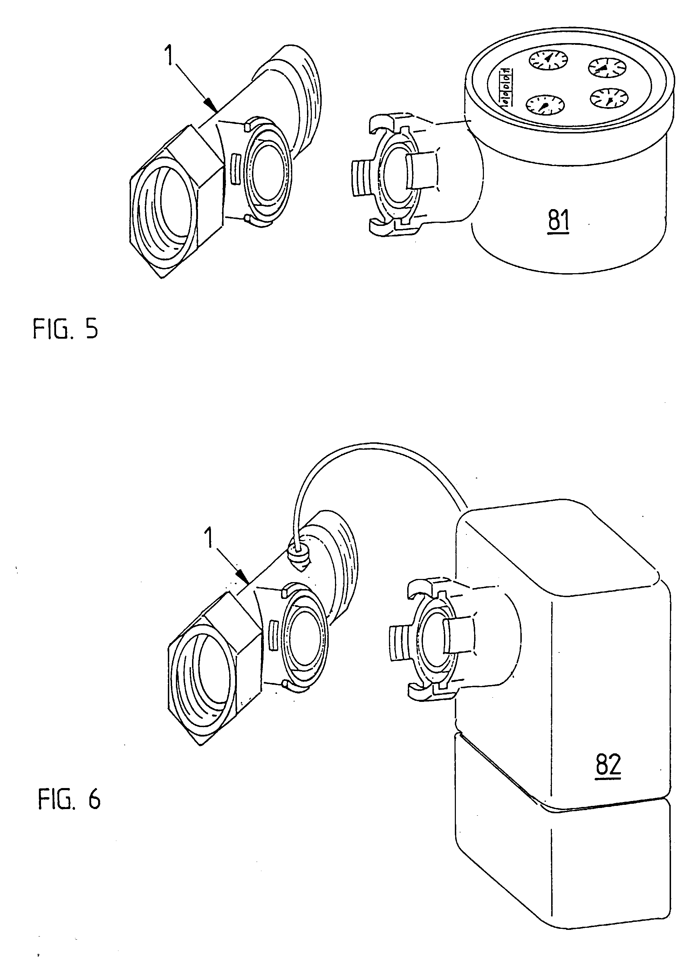

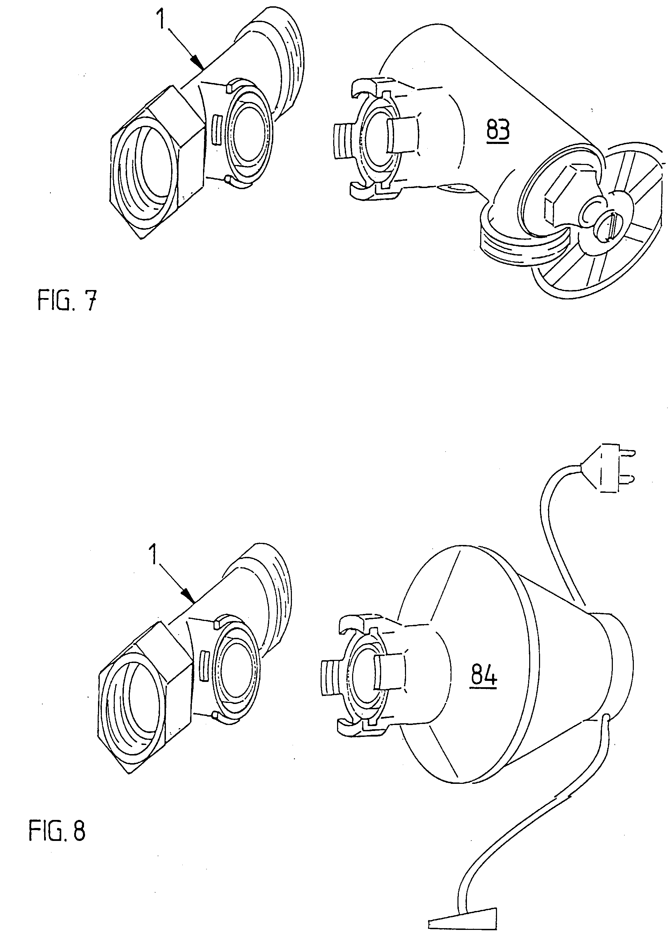

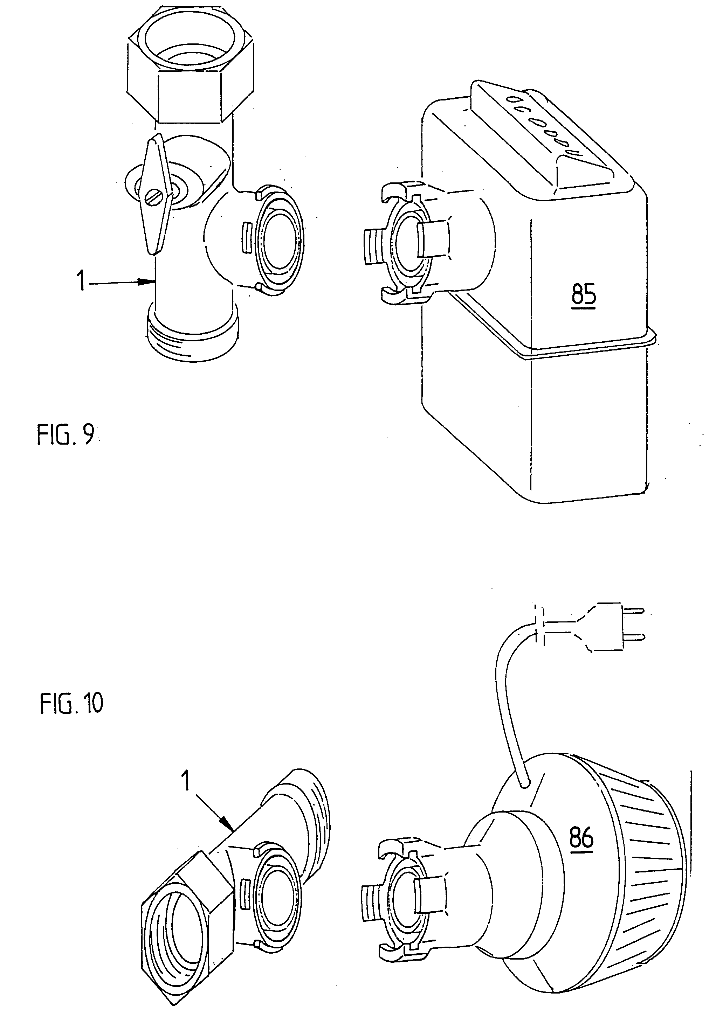

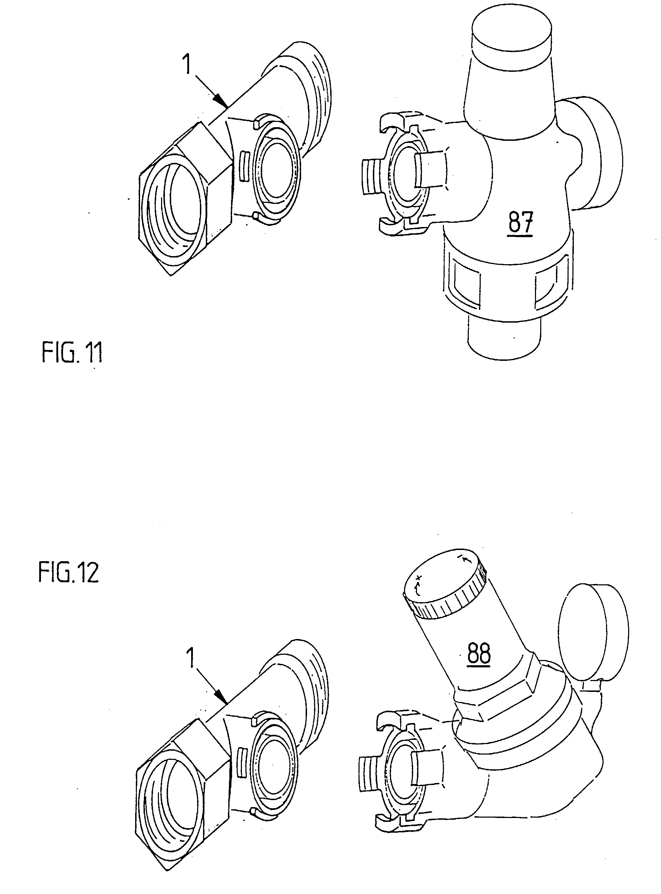

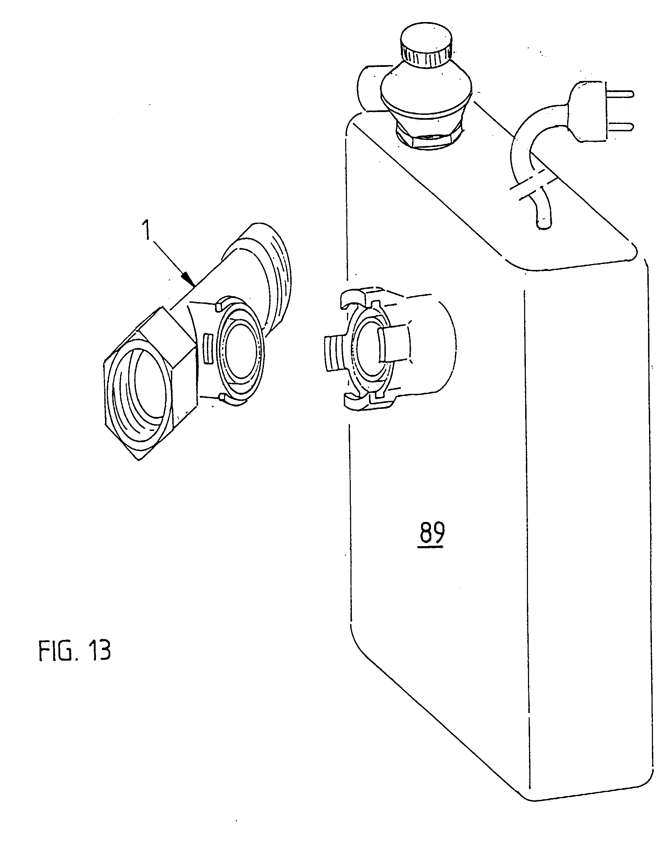

In den Fig. 5 bis 13 ist eine Vielzahl von Geräten dargestellt, welche mit einer erfindungsgemäßen Vorrichtung an in einem Leitungsstrang befindliche rohrförmige Armaturen 1 ankuppelbar sind. Es sind dies ein Wasserzähler 81 bzw. ein Wärmemengenzähler, ein Dosiergerät 82, ein Wasserenthärter 83, ein Rohrbruchsicherungsgerät 84, ein Gaszähler 85, eine Umwälzpumpe 86, ein Rohrtrenner 87, ein Druckminderer 88 und ein Wassererwärmer 89.

Wesentlich ist, daß die rohrförmige Armatur 1 mit einem quer abragenden Stutzen 13 ausgebildet ist, welcher zwei Kanäle 13, 14 umschließt und daß auch dasjenige Gerät, welches angeschlossen wird, mit einem Zuströmkanal und mit einem Abströmkanal ausgebildet ist. Durch eine erfindungsgemäße Vorrichtung ist ein derartiges Gerät mit sehr geringem Aufwand an eine mit Kupplungselementen ausgebildete rohrförmige Armatur, welche sich in einem Rohrstrang für flüssige oder gasförmige Medien befindet, anschließbar.

## Patentansprüche

1. Vorrichtung zum lösbaren Anschluß eines Gerätes [2] der Technik für flüssige bzw. gasförmige Medien, insbesondere der Sanitärtechnik, der Heizungstechnik und der Gastechnik, an eine rohrförmige Armatur [1], bestehend aus der Armatur, welche zwei Rohrstücke [1a, 1b] aufweist, die zum Anschluß an eine Leitung dienen und welche einen quer abragenden Rohrstutzen [11] aufweist, der mit einem inneren Kanal [13] und mit einem äußeren Kanal [14] ausgebildet ist, wobei die beiden Kanäle [13, 14] mit jeweils einem der beiden Rohrstücke verbunden sind, und aus einem Anschlußstutzen [21] für das Gerät [2], der gleichfalls mit einem inneren Kanal [23] und mit einem äußeren Kanal [24] ausgebildet ist, dadurch gekennzeichnet, daß einerseits der quer abragende Rohrstutzen [11] oder ein an diesem mittels eines Anschlußflansches befestigbarer Adapterstutzen [7a] und andererseits der Anschlußstutzen [21] für das Gerät [2] oder ein an diesem mittels eines Anschlußflansches befestigbarer Adapterstutzen [7] mit einander zugeordneten an sich bekannten Kupplungselementen ausgebildet sind, bei welchen die ersten Kupplungselemente durch an der Mantelfläche eines der Stutzen [11, 7a] in einem Kreisring angeordnete, voneinander im Abstand befindliche Rippen [3, 3a] und die zweiten Kupplungselemente durch vom freien Ende des anderen Stutzens [21, 7] vorragende Klauen [4], welche durch die zwischen den Rippen [3, 3a] befindlichen Ausnehmungen hindurch bewegbar sind und welche durch Verdrehung gegenüber den Rippen [3, 3a] mit diesen verriegelbar sind, gebildet sind und daß eine Sicherungseinrichtung [5, 6, 42, 43] zur Verhinderung der unbeabsichtigten Verdrehung der beiden Kupplungselemente [3, 3a, 4] gegeneinander vorgesehen ist.

2. Vorrichtung nach Patentanspruch 1, dadurch gekennzeichnet, daß als Sicherungseinrichtung eine Scheibe [5] vorgesehen ist, welche mit Ausnehmungen [52] versehen ist, die mit den Klauen [4] übereinstimmen.

3. Vorrichtung nach Patentanspruch 1, dadurch gekennzeichnet, daß als Sicherungseinrichtung ein Sicherungsring [6] vorgesehen ist, welcher über den Kupplungselementen [3, 3a, 4] verspannbar ist.

4. Vorrichtung nach Patentanspruch 1, dadurch gekennzeichnet, daß eine der Klauen [4] mit einer Gewindebohrung [42] für die Aufnahme einer Sicherungsschraube [43] ausgebildet ist.

5. Vorrichtung nach einem der Patentansprüche 1 bis 4, dadurch gekennzeichnet, daß die ersten Kupplungselemente in an sich bekannter Weise durch vier über den Umfang gleichmäßig verteilte Rippen [3, 3a] und die zweiten Kupplungselemente durch vier Klauen [4], deren Breite dem Abstand der Rippen [3, 3a] voneinander entspricht, gebildet sind.

6. Vorrichtung nach einem der Patentansprüche 1 bis 5, dadurch gekennzeichnet, daß die einander zugeordneten Lagerflächen der Rippen [3, 3a] und bzw. oder der Klauen [4] in an sich bekannter Weise mit keilförmig ausgebildeten Auflaufflächen ausgebildet sind.

## Claims

1. A device for releasably connecting an apparatus (2) for use in liquid or gaseous media engineering, especially sanitary engineering, heating engineering and gas engineering, to a tubular fitting (1), consisting of the fitting, which comprises two pipe pieces (la, 1b) serving for connection to a conduit and which comprises a pipe socket branch (11) which projects perpendicularly therefrom and is constructed with an inner channel (13) and an outer channel (14), the two channels (13, 14) each being connected with one of the two pipe pieces, and of a connecting branch (21) for the apparatus (2), which is likewise constructed with an inner channel (23) and an outer channel (24), characterised in that, on the one hand, the perpendicularly projecting pipe socket branch (11) or an adapter branch (7a) securable thereto by means of a connecting flange and, on the other hand, the connecting branch (21) for the apparatus (2) or an adapter branch (7) securable thereto by means of a connecting flange are constructed with related coupling members known per se, the first coupling members taking the form of spaced ribs (3, 3a) arranged in a ring on the outer circumferential surface of one of the branches (11, 7a) and the second coupling members taking the form of claws (4) projecting from the free end of the other branch (21, 7), which claws (4) may be moved through recesses located between the ribs (3, 3a) and may be locked together with the ribs (3, 3a) by rotation relative thereto, and in that a safety device (5, 6, 42, 43) is provided to prevent unintentional relative rotation of the two coupling members (3, 3a, 4).

2. A device according to claim 1, characterised in that the safety device takes the form of a disk (5), which is provided with recesses (52) which match the claws (4).

3. A device according to claim 1, characterised in that the safety device takes the form of a safety ring (6), which may be clamped over the coupling members (3, 3a, 4).

4. A device according to claim 1, characterised in that one of the claws (4) is constructed with a threaded hole (42) for accommodating a safety screw (43).

5. A device according to any one of claims 1 to 4, characterised in that the first coupling members take the form, in a manner known per se, of four ribs (3, 3a) distributed evenly over the circumference and the second coupling members take the form of four claws (4), the width of which corresponds to the distance between the ribs (3, 3a).

6. A device according to any one of claims 1 to 5, characterised in that the related bearing faces of the ribs (3, 3a) and/or the claws (4) are constructed in a manner known per se with wedge-shaped leading surfaces.

## Revendications

1. Dispositif destiné à raccorder de manière amovible un dispositif (2) de la technique pour fluides liquides ou gazeux, en particulier de la technique sanitaire, de la technique de chauffage et de la technique du gaz, à un élément tubulaire de robinetterie (1), constitué de l'élément de robinetterie, qui comporte deux éléments de tube (la, 1b), qui servent au raccord avec une conduite et qui présentent une tubulure (11) dépassant transversalement, laquelle présente un canal intérieur (13) et un canal extérieur (14), les deux canaux (13, 14) étant reliés chacun à l'un des deux éléments tubulaires et constitués d'une tubulure de raccord (21) pour le dispositif (2), qui présente également un canal intérieur (23) et un canal extérieur (24), caractérisé en ce que d'une part la tubulure (11) dépassant transversalement ou une tubulure d'adaptation (7a), à fixer sur celle-ci au moyen d'une bride de raccord, et d'autre part la tubulure de raccord (21) pour le dispositif (2) ou une tubulure d'adaptation (7), à fixer sur celui-ci au moyen d'une bride de raccord, présentent des éléments d'accouplement connus en soi, associés les uns aux autres, dans lesquels les premiers éléments d'accouplement sont formés par des nervures (3, 3a) espacées les unes des autres, disposées en anneau de cercle sur la surface d'enveloppe de l'une des tubulures (11, 7a), et les deuxièmes éléments d'accouplement sont formés par des griffes (4), dépassant de l'extrémité libre de l'autre tubulure (21, 7) qui sont déplaçables à travers les évidement se trouvant entre les nervures (3, 3a) et qui sont verrouillables, par rotation par rapport aux nervures (3, 3a), avec celles-ci et en ce qu'un dispositif de sûreté (5, 6, 42, 43) est prévu pour empêcher la rotation involontaire des deux éléments d'accouplement (3, 3a, 4) l'un par rapport à l'autre.

2. Dispositif selon la revendication 1, caractérisé en ce qu'il est prévu comme dispositif de sûreté un disque (5), qui présente des évidements (52), qui coïncident avec les griffes (4).

3. Dispositif selon la revendication 1, caractérisé en ce qu'il est prévu comme dispositif de sûreté un anneau de sûreté (6) qui peut être serré sur les élément d'accouplement (3, 3a, 4).

4. Dispositif selon la revendication 1, caractérisé en ce que l'une des griffes (4) présente un trou taraudé (42) destiné à recevoir une vis de sûreté (43).

5. Dispositif selon l'une des revendications 1 à 4, caractérisé en ce que les premiers éléments d'accouplement sont formés, de manière connue en soi, par quatre nervures (3, 3a), uniformément réparties sur le pourtour, et les deuxièmes éléments d'accouplement sont formés par quatre griffes (4) dont la largeur correspond à l'écartement des nervures (3, 3a).

6. Dispositif selon l'une des revendications 1 à 5, caractérisé en ce que les surfaces d'appui correspondant les unes aux autres des nervures (3, 3a) et respectivement ou des griffes (4) présentent, de manière connue en soi, des surfaces d'entrée en forme de coin.
